# FASCICULE DE BREVET EUROPEEN

(11) **EP 3 382 146 B1**
(45) Date de publication et mention de la délivrance du brevet: **06.01.2021**
(21) Numéro de dépôt: 18165331.2
(22) Date de dépôt: 30.03.2018
(51) Int. Cl.: F01D 5/08, F01D 5/30

(54) **DISPOSITIF DE REFROIDISSEMENT D'UN DISQUE DE TURBINE ET TURBOMACHINE ASSOCIÉE**
KÜHLVORRICHTUNG EINER TURBINENSCHEIBE UND ZUGEHÖRIGE TURBOMASCHINE
COOLING DEVICE FOR A TURBINE DISK AND CORRESPONDING TURBOMACHINE

(30) Priorité: 31.03.2017 FR 1752751
(43) Date de publication de la demande: 03.10.2018
(73) Titulaire: SAFRAN AIRCRAFT ENGINES, 75015 Paris (FR)
(72) Inventeur: CASALIGGI, Pascal Grégory, 77550 MOISSY-CRAMAYEL (FR)
(74) Mandataire: Regimbeau

(56) Documents cités:
- EP-A1- 1 524 406
- EP-A2- 2 055 895
- WO-A2-2015/073112
- US-A- 3 853 425
- US-A- 5 735 671

## Description

### DOMAINE TECHNIQUE GÉNÉRAL ET ART ANTÉRIEUR

L'invention concerne de manière générale les turbomachines, et plus particulièrement la ventilation des étages d'une turbine. Des domaines d'application de l'invention sont les turboréacteurs et turbopropulseurs d'avions et les turbines à gaz industrielles.

Une turbomachine comporte classiquement une nacelle dont l'ouverture permet l'admission d'un flux déterminé d'air vers le moteur proprement dit. Conventionnellement, les gaz s'écoulent d'amont en aval à travers la turbomachine.

Généralement, la turbomachine comprend une ou plusieurs sections de compression de l'air admis dans le moteur (généralement une section basse pression et une section haute pression). L'air ainsi comprimé est admis dans la chambre de combustion et mélangé avec du carburant avant d'y être brûlé.

Les gaz de combustion chauds issus de cette combustion sont ensuite détendus dans différents étages de turbine. Une première détente est faite dans un étage à haute pression immédiatement en aval de la chambre de combustion et qui reçoit les gaz à la température la plus élevée. Les gaz sont détendus à nouveau en étant guidés à travers les étages de turbine dits à basse pression.

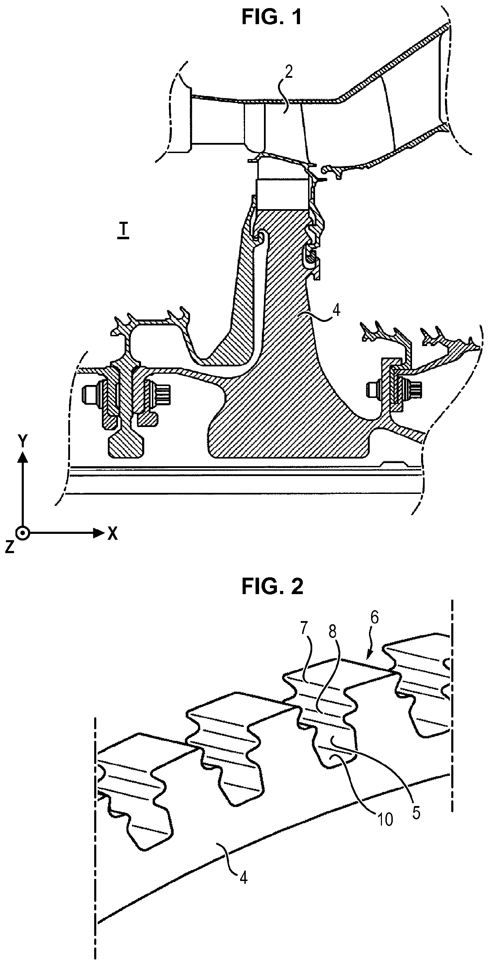

Une turbine T d'axe X, dont un exemple est illustré en figure 1, basse pression ou haute pression comporte classiquement un ou plusieurs étages, chacun étant constitué d'une rangée d'aubes fixes, aussi appelée distributeur, suivie d'une rangée d'aubes mobiles 2, qui forment le rotor. Le distributeur dévie le flux de gaz prélevé au niveau de la chambre de combustion vers les aubes mobiles 2 de turbine à un angle et une vitesse appropriée afin d'entraîner en rotation ces aubes mobiles 2 et le rotor de la turbine T.

Le rotor comprend généralement un assemblage de plusieurs disques 4, dont un exemple est représenté dans la figure 1.

Ces disques 4 comprennent généralement, comme dans le mode de réalisation représenté en figure 2, des rainures périphériques telles que des empreintes d'assemblage ou alvéoles 5 dans lesquelles les aubes mobiles 2 sont mises et maintenues en position, notamment grâce au profil particulier des « dents » 6 du disque encadrant chaque empreinte 5 (ou alvéole) dans lesquelles sont insérés les aubes 2.

Une dent 6 de disque présente un profil comportant une première 7 et une deuxième 8 portées formant un ensemble coopérant avec des surfaces complémentaires formées sur l'aube mobile 2. Ces portées 7 et 8 assurent un arrêt radial et tangentiel au pied d'aube par rapport au disque. D'autres géométries peuvent également assurer ces fonctions, comme par exemple un pied d'aube présentant une section en queue d'aronde.

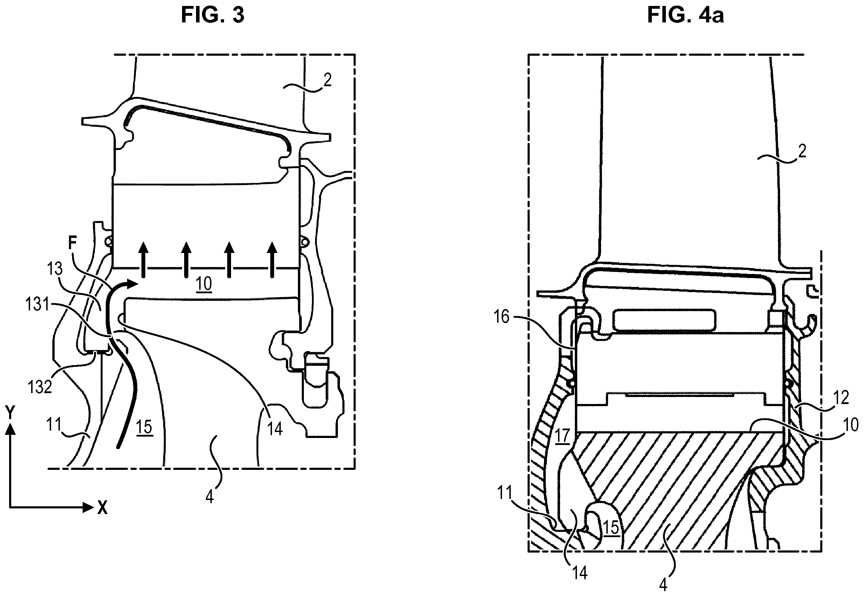

L'arrêt axial de l'aube mobile 2 sur le disque 4 peut être assuré par le frottement entre l'aube 2 et les dents 6 de disque, ou par des flasques amont 11 et aval 12 représentés sur la figure 3.

Un circuit de ventilation spécifique pour les disques 4 du rotor a été conçu pour limiter les effets dus à l'environnement thermique extrême auquel est soumis le rotor.

Le circuit de ventilation dirige un flux F d'air pressurisé prélevé en amont de la turbine T, typiquement au niveau d'un des compresseurs, pour l'introduire dans le rotor en vue de refroidir ses disques 4, en particulier ses aubes 2.

A cet effet, l'aube comporte une série de canaux internes permettant au flux F de refroidissement de circuler à l'intérieur de ceux-ci et de refroidir plus efficacement l'aube 2.

L'aube 2 n'emplit pas totalement l'alvéole 5, formant un fond 10 de l'alvéole 5 s'étendant sensiblement selon l'axe X, le fond 10 de l'alvéole 5 étant situé en amont (dans le sens d'écoulement des gaz) des canaux internes permettant la circulation du flux F de refroidissement jusqu'à ces derniers.

Ce flux F de refroidissement traverse plusieurs enceintes délimitées par les disques 4 de rotor et des flasques amont 11 et aval 12 prévus à cet effet, les différentes enceintes successives étant mises en communication fluidiques.

Le positionnement axial et radial nécessaire aux flasques 11 et 12 par rapport aux disques 4 de rotor pour assurer leur rôle est réalisé classiquement par des crabots 13 situés dans le prolongement des dents 6 de disque. Dans l'exemple illustré, ces crabots 13 forment une surépaisseur au niveau de la surface amont du disque 4, cette surépaisseur formant un épaulement axial 131 permettant une mise en position axiale et un centrage court 132 permettant une mise en position radiale de l'anneau d'étanchéité 11 sur le disque 4 de rotor.

Les crabots 13 encadrent des lunules 14, qui sont des dépressions s'étendant sensiblement radialement par rapport à l'axe X de la turbomachine, et sont habituellement usinées directement sur la face amont du disque 4 de rotor.

Ces lunules 14 assurent la continuité du circuit de ventilation en formant une communication fluidique entre une cavité 15 située en amont dans le sens d'écoulement des fluides et les fonds d'alvéoles 10 situées dans les alvéoles 5.

Dans l'art antérieur illustré sur la figure 4a (voir brevet FR 2 981 979), les lunules 14 présentent un décalage de niveau ainsi qu'une inclinaison par rapport aux surfaces amont 16 des dents 6 de disque. Ce mode de réalisation présente le désavantage de former une cavité intermédiaire 17 juste en amont des alvéoles 5. Le flux F de refroidissement circule d'une cavité amont 15 vers la cavité intermédiaire 17 par les lunules 14.

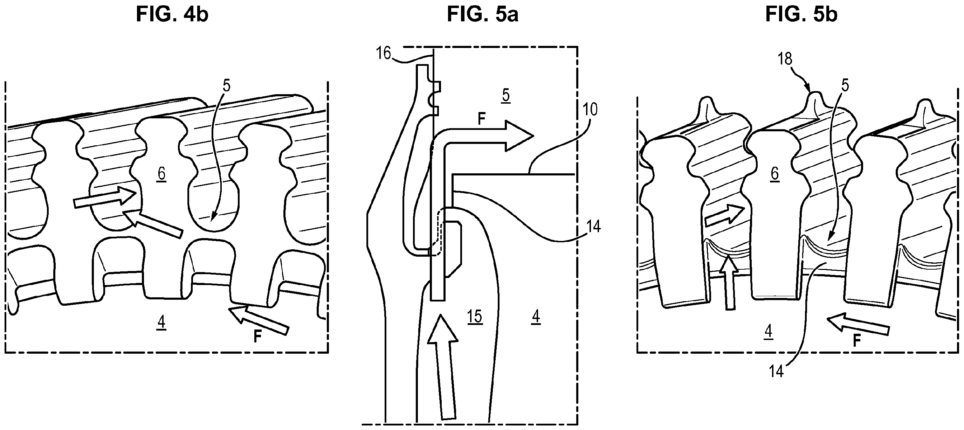

Dans cette cavité intermédiaire 17, le flux F de refroidissement présente une vitesse tangentielle plus faible que celle des alvéoles 5, ce phénomène étant représenté sur la figure 4b. Cette différence de vitesse tangentielle empêche le flux F de refroidissement de circuler de manière optimale vers les alvéoles 5 et réduit les performances du système de refroidissement.

En référence à la figure 5a, un second mode de réalisation présente des lunules 14 réalisées en retrait et non inclinées par rapport aux surfaces amont 16 des dents 6 de disque.

De cette manière, le flux F passant par une lunule 14 est plus apte à circuler dans les alvéoles 5, les effets de ce mode de réalisation étant illustrés sur la figure 5b.

Les dents 6 de disque peuvent comporter des détrompeurs 18 sécurisant les étapes d'assemblage en évitant le montage d'aubes 2 à l'envers axialement sur les disques.

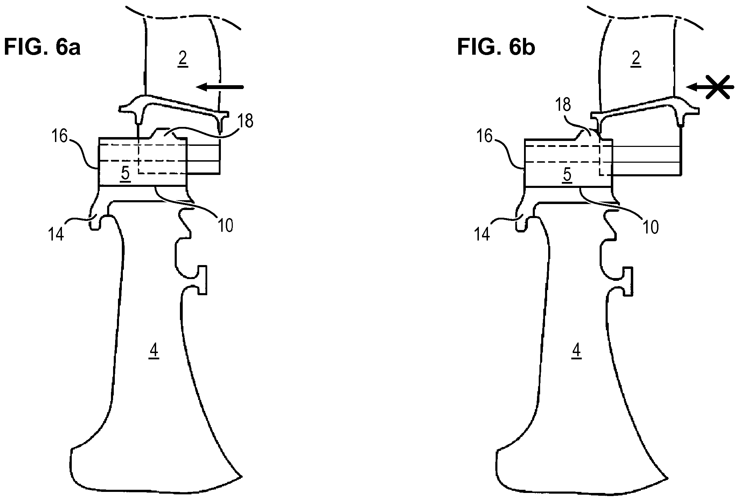

En référence à la figure 6, l'aube 2 est insérée dans l'alvéole du disque, et présente une géométrie coopérant avec le détrompeur 18 pour empêcher l'aube d'être insérée dans le mauvais sens.

Les détrompeurs 18 peuvent également servir à équilibrer le disque.

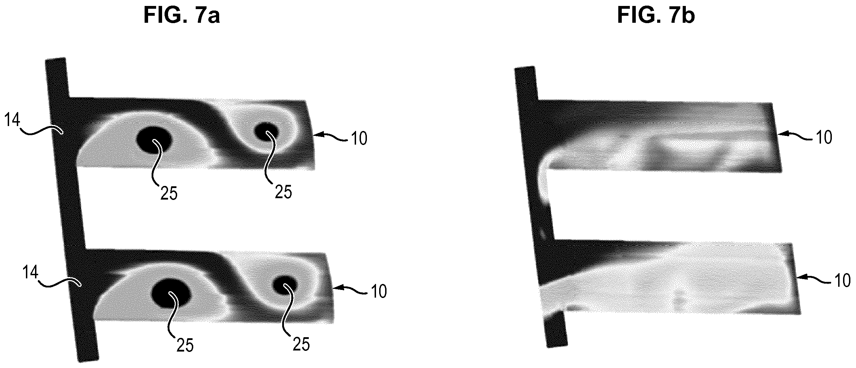

La pression totale relative des gaz en fond d'alvéole 10, représentée sur les figures 7a et 7b, permet de souligner l'impact de cette modification sur la répartition du flux F de refroidissement dans les alvéoles 5.

La figure 7a représentant la répartition de la pression des gaz dans le fond d'alvéole 10 dans un mode de réalisation où les lunules 14 présentent un décalage angulaire et de niveau vers l'amont par rapport aux surfaces amont 16 des dents 6 de disque, la figure 7b représentant le même paramètre dans le mode de réalisation où la lunule 14 est en retrait vers l'aval par rapport aux surfaces amont 16 des dents 6 du disque.

Les zones présentant des niveaux de pression totale relative plus faibles 25 alimentent moins efficacement les canaux de refroidissement des aubages, ce qui réduit les performances du système de refroidissement et donc la durée de vie des aubes 2.

Il est aisément observable que la localisation des lunules 14 en retrait des surfaces amont 16 des dents 6 de disque permet de limiter les disparités dans la répartition de la charge et d'obtenir un écoulement plus homogène, donc un meilleur refroidissement.

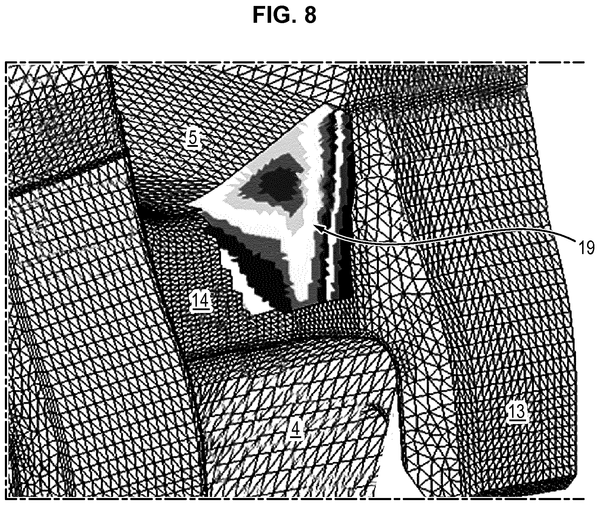

Si cette modification apporte un gain de performances pour le système de refroidissement, elle apporte cependant un inconvénient pour la durée de vie du disque 4 de rotor. En effet, l'arête 19 entre la lunule 14 et l'alvéole 5 présente des zones de concentration de contraintes, représentées sur la figure 8.

Ces pics de contraintes limitent fortement la durée de vie des disques 4. L'écoulement du flux de refroidissement comportant en outre plusieurs coudes, la perte de charge globale du circuit représente également un facteur amenuisant sensiblement les performances du système de refroidissement des aubes 2, et limite donc le gain en durée de vie des aubes 2. EP 2055895 A2 divulgue un dispositif de refroidissement de l'art antérieur selon le préambule de la revendication 1.

### PRÉSENTATION GÉNÉRALE DE L'INVENTION

Un but de l'invention est d'augmenter la durée de vie des disques de rotor.

Un autre but est d'augmenter la durée de vie des aubes.

Un autre but est d'augmenter les performances du système de refroidissement.

Un autre but est de diminuer les pertes de charges dans le système de refroidissement.

Un autre but est de diminuer les concentrations de contraintes aux alentours des lunules.

Un autre but de l'invention est de réduire e débit du flux prélevé en amont des turbines pour alimenter le système de refroidissement.

Selon un aspect, l'invention propose un dispositif de refroidissement d'un disque d'une turbine s'étendant selon un axe, comme décrit dans la revendication 1, e disque comportant sur sa circonférence au moins une alvéole encadrée par des dents de disque présentant chacune une face amont, l'alvéole comportant un fond en communication fluidique avec une cavité amont par l'intermédiaire d'au moins une lunule, la lunule comportant des portions de surfaces latérales, caractérisé en ce que les portions de surfaces latérales sont inclinées par rapport au plan radial qui constitue le plan de symétrie de l'alvéole dans laquelle débouche la lunule, l'alvéole s'étendant selon un axe incliné d'un angle de brochage par rapport à l'axe de la turbomachine, l'angle de brochage étant supérieur à 0° et inférieur ou égal à 20°. Le sens d'inclinaison des surfaces latérales est choisi en fonction du sens de rotation attendu pour le disque, les surfaces latérales étant inclinées dans la même direction.

Un tel dispositif est avantageusement complété par les différentes caractéristiques suivantes prises seules ou en combinaison :
- la lunule comporte un fond situé en retrait vers l'aval par rapport aux faces amont des dents de disque ;
- la limite entre le fond de lunule et le fond d'alvéole présente une arête cassée ;
- l'arête cassée comporte un congé d'arête qui présente :
   ∘ une première extrémité, correspondant à une intersection entre le congé et une première dent, et une deuxième extrémité, correspondant à une intersection entre le congé et une deuxième dent ;
   ∘ une pluralité de plans radiaux, chaque plan radial comprenant l'axe de la turbine et coupant le congé entre la première et la deuxième extrémité, et
   ∘ une pluralité de sections radiales, chaque section radiale étant définie par l'intersection entre un plan radial associé et le congé, chaque section radiale présentant un rayon de courbure du congé d'arête, le rayon de courbure du congé d'arête évoluant entre la première et la deuxième extrémité, notamment selon la position tangentielle du rayon de courbure du congé d'arête ;
- le rapport entre le rayon de courbure le plus long du congé d'arête et le rayon de courbure le plus court dudit congé d'arête peut être compris entre 2 et 20 ;
- la position tangentielle du plus long des rayons de courbure du congé d'arête est située au niveau d'un pic de contrainte du congé d'arête ;
- la lunule comporte une portion courbe intrados et une portion courbe extrados joignant les portions de surfaces latérales et le fond de ladite lunule, chaque portion courbe comportant une pluralité de rayons de courbure ;
- les rayons de courbure de la portion courbe intrados sont différents des rayons de courbures de la portion courbe extrados ;
- sur la portion courbe intrados ou la portion courbe extrados, un rapport entre un plus long des rayons de courbure et un plus court des rayons de courbure est compris entre 2 et 13 ;
- un rapport entre chacun des rayons de courbure de la plus chargée des portions courbes intrados et extrados et chacun des rayons de courbure de la moins chargée des portions courbes intrados et extrados est compris entre 1 et 20 ;
- un axe normal au fond de lunule est défini comme étant perpendiculaire à une droite passant par les extrémités du fond de la lunule, cet axe normal étant incliné d'un angle d'inclinaison par rapport à l'axe de la turbine dans une première direction ;
- l'axe normal au fond de lunule est incliné par rapport à l'axe de la turbine dans une deuxième direction ;
- un rapport entre l'angle d'inclinaison de l'axe normal par rapport à l'axe de la turbine dans la première direction, et l'angle de brochage, est compris entre 0,2 et 1,4 ;
- l'angle de brochage est compris entre 3° et 16°, de préférence entre 6° et 12°;
- les portions de surfaces latérales de la lunule sont courbes, et dans lequel au moins une des portions de surfaces latérales présente un rayon de courbure compris entre 20mm et 200mm ;
- les portions de surfaces latérales présentent, au niveau du fond de l'alvéole, une inclinaison inférieure à 20° par rapport à un plan passant par un point médian de la lunule au niveau du fond de l'alvéole ;
- les portions de surfaces latérales présentent une extrémité radialement intérieure, et dans lequel les portions de surfaces latérales présentent, au niveau de l'extrémité radialement intérieure, une inclinaison étant comprise entre 15° et 60° par rapport à un plan passant par un point médian de la lunule au niveau de l'extrémité radialement intérieure des portions de surfaces latérales ;
- le rayon de courbure d'une portion de surface latérale présente une valeur maximale au niveau de l'alvéole et une valeur minimale au niveau de l'extrémité radialement intérieure des portions de surfaces latérales.

Selon un autre aspect, l'invention propose une turbomachine comportant un tel dispositif de refroidissement d'un disque comme décrit dans la revendication 19.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- La figure 1 est une représentation schématique d'une vue en coupe de profil d'une portion de turbine de turbomachine ;
- La figure 2 est une modélisation 3D centrée sur le profil circonférentiel d'un disque de rotor ;
- La figure 3 est une vue en coupe axiale centrée sur la zone d'assemblage entre un disque de rotor et une aube ;
- La figure 4a est une vue en coupe axiale d'un premier mode de réalisation de lunule de l'art antérieur, qui symbolise la trajectoire de l'écoulement du fluide de refroidissement ;
- La figure 4b est une modélisation 3D d'un premier mode de réalisation de lunule de l'art antérieur, qui symbolise la trajectoire de l'écoulement du fluide de refroidissement ;
- La figure 5a est une vue en coupe de profil d'un second mode de réalisation de lunule de l'art antérieur, qui symbolise la trajectoire de l'écoulement du fluide de refroidissement ;
- La figure 5b est une modélisation 3D d'un second mode de réalisation de lunule de l'art antérieur, qui symbolise la trajectoire de l'écoulement du fluide de refroidissement ;
- La figure 6a est une vue schématisée de profil du montage d'une aube dans une alvéole dans un premier sens ;
- La figure 6b est une vue schématisée de profil du montage d'une aube dans une alvéole dans un second sens ;
- La figure 7a est une représentation d'une simulation de la pression totale relative du fluide de refroidissement dans les alvéoles dans le premier mode de réalisation de l'art antérieur ;
- La figure 7b est une représentation d'une simulation de la pression totale relative du fluide de refroidissement dans les alvéoles dans le second mode de réalisation de l'art antérieur ;
- La figure 8 est une simulation par éléments finis de la répartition des contraintes surfaciques au niveau de la zone d'interface lunule/alvéole ;
- La figure 9a est une vue partielle en coupe de haut de la lunule ;
- La figure 9b est une vue partielle en coupe de profil centrée sur la lunule ;
- La figure 9c est une vue partielle en coupe de profil centrée sur la lunule ;
- La figure 9d est une représentation 3D d'une portion d'un disque centrée sur les alvéoles et les lunules ;
- La figure 10a est une représentation schématique vue de face d'une portion de disque mettant en évidence un exemple de lunule droite qui est en dehors de la portée des revendications ;
- La figure 10b est une représentation schématique vue de face d'une portion de disque mettant en évidence un mode de réalisation de lunule inclinée ainsi que l'effet sur l'écoulement du flux d'une telle inclinaison ;
- La figure 11 est une représentation schématique vue de face d'une portion de disque mettant en évidence un mode de réalisation de lunule courbe ;
- La figure 12 représente une arête présentant un congé d'arête, dont le rayon de courbure évolue de manière conforme à l'invention ; plus précisément la figure 12a représente une arête à la limite entre une lunule et une alvéole, l'arête présentant un congé et étant coupée par deux plans radiaux, la figure 12b représentant une vue de détail de l'arête ;
- La figure 13 représente une lunule conforme à l'invention, dont les portions de surfaces latérales sont courbes.

### DESCRIPTION D'UN OU PLUSIEURS MODES DE MISE EN ŒUVRE ET DE RÉALISATION

Les modes de réalisation décrits ci-après concernent le cas d'une turbine T comprenant une série de distributeurs (ou stators) alternés selon l'axe X de rotation de la turbomachine avec une série de disques 4 mobiles (ou rotor). Ceci n'est cependant pas limitatif, dans la mesure où la turbine T pourrait comprendre un nombre d'étages différent, pouvant être mono- ou multi-étages.

Les disques 4 présentent des lunules 14 dont la géométrie est optimisée pour faciliter l'écoulement du fluide dans le circuit de ventilation et donc les performances du système de refroidissement, tout en minimisant les concentrations de contraintes internes dans la pièce au niveau des lunules 14.

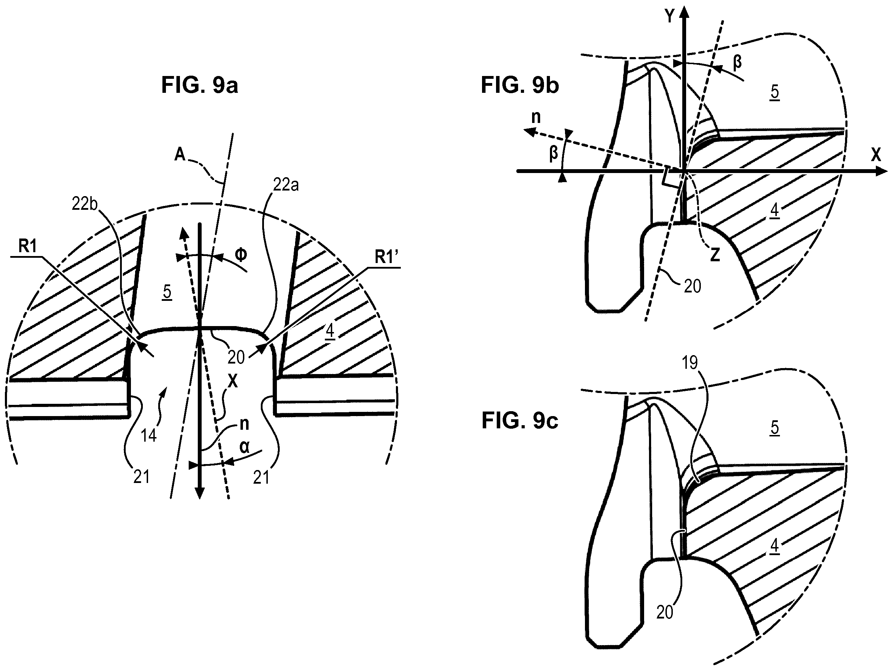

En référence à la figure 9a, le fond 20 d'une lunule 14 s'étend sensiblement radialement par rapport à l'axe X de la turbomachine et peut être défini par un axe normal n.

Le fond 20 de lunule 14 pouvant présenter des géométries diverses, l'axe normal n peut être défini comme perpendiculaire à une droite passant par les extrémités du fond 20 la lunule 14.

L'axe normal n est incliné d'un angle α par rapport à l'axe X de la turbomachine autour d'un premier axe radial Y du disque 4 de rotor.

Dans certains modes de réalisation, les alvéoles s'étendent selon un axe de brochage A qui peut être incliné d'un angle de brochage Φ par rapport à l'axe X de la turbomachine T.

Cet angle de brochage Φ peut être compris entre 0 et 20° par rapport à la direction axiale X, de préférence entre 3° et 16°, en particulier entre 6° et 12°.Cette inclinaison peut être orientée dans toutes les directions, de sorte que l'orientation potentielle de l'axe de brochage est comprise dans un cône d'axe parallèle à l'axe X de la turbomachine et d'une ouverture de 20°.

L'inclinaison de l'axe de brochage A engendre une asymétrie des contraintes au niveau de la lunule 14.

Plus l'angle de brochage Φ est important, plus la répartition des contraintes est asymétrique.

Afin de minimiser les contraintes dans les lunules 14, et particulièrement les maximums de contraintes, les lunules 14 peuvent présenter une géométrie asymétrique, permettant de préserver la performance aérodynamique et la faisabilité technique de la partie la moins chargée tout en favorisant la performance mécanique dans la zone la plus chargée.

L'angle α d'inclinaison de la normale n à la lunule 14 par rapport à l'axe X de la turbomachine permet ainsi de réduire l'effet d'asymétrie de la répartition de contraintes, notamment en réduisant le pic de contrainte dans la zone la plus chargée.

Il est entendu par pic de contraintes un maximum local de contraintes.

Le rapport entre l'angle α d'inclinaison et l'angle de brochage Φ peut être compris entre 0,2 et 1,4.

Plus l'angle α d'inclinaison est proche de l'angle Φ de brochage, plus la dissymétrie de contraintes est atténuée.

La normale n à la lunule 14 peut être comprise dans un plan orthogonal à un rayon issu de l'axe X de la turbomachine, l'angle a d'inclinaison étant exprimé dans ce plan.

La lunule 14 est également délimitée par des portions de surface latérales 21 s'étendant sensiblement radialement, et deux portions de surface courbe dite intrados 22a et dite extrados 22b joignant le fond 20 de la lunule 14 et les surfaces latérales 21 de la lunule 14. Les portions de surface courbe respectivement intrados 22a et extrados 22b correspondent ici à une portion de surface agencée du côté respectif intrados et extrados de la pale de l'aube 2 assemblée dans l'alvéole 5 correspondante.

Les portions de surface courbe intrados 22a et extrados 22b des lunules 14 présentent des rayons de courbure R1, R1' maximisés pour minimiser les coefficients de concentration de contraintes.

Chaque portion courbe 22a et 22b peut comporter plusieurs rayons de courbure R1, R1' différents selon la localisation du point concerné.

En raison de la concentration asymétrique des contraintes au niveau des lunules 14, une géométrie symétrique de la lunule 14 pourrait ne pas avoir d'effet significatif sur la réduction du pic de contrainte maximum simulé dans le disque 4 au niveau de la lunule 14.

Pour cette raison, chacune des portions de surface courbe 22a et 22b présente un rayon de courbure R1, R1' qui peut être fixe ou variable, le rayon de courbure R1' de la portion courbe intrados 22a pouvant être identique ou différent du rayon de courbure R1 de la portion de surface courbe extrados 22b.

En fonction de l'angle de brochage Φ, une parmi la portion courbe intrados 22a et la portion courbe extrados 22b peut être plus chargée en contraintes que l'autre.

Dans l'exemple illustré en figure 9a, l'inclinaison de l'axe de brochage A par rapport à l'axe X de la turbomachine engendre une répartition de contraintes dans la lunule 14 dans laquelle la portion courbe extrados 22b est la plus chargée.

Bien évidemment, pour une valeur opposée d'angle de brochage Φ, la répartition de contraintes obtenue présenterait des contraintes plus importantes dans la portion courbe intrados 22a que dans la portion courbe extrados 22b.

Plus l'angle de brochage Φ est important, plus le pic de contraintes est éloigné tangentiellement d'un point médian de la lunule 14 et plus la répartition de contraintes est asymétrique.

Par point médian de la lunule 14, il est entendu un point de la lunule 14 situé à équidistance entre la portion courbe extrados 22b et la portion courbe intrados 22a.

Par tangentiellement, il est entendu une direction tangentielle qui est issue d'un rayon, et qui est orthogonale audit rayon et à l'axe X de la turbomachine.

Pour un angle de brochage Φ nul, la répartition de contraintes serait symétrique.

En fonction de la configuration de l'angle de brochage Φ, et donc de la position du pic de contrainte, la portion courbe 22a, 22b la plus chargée présente des rayons de courbure plus importants que la portion courbe la moins chargée.

Le rapport d'un rayon de courbure R1, R1' d'une portion courbe 22a, 22b la plus chargée par rapport à un rayon de courbure d'une portion courbe peu chargée peut être compris entre 1 et 20.

Plus particulièrement, plus l'angle de brochage Φ sera important, plus le rapport entre le rayon de courbure R1, R1' le plus grand de la portion courbe 22a, 22b la plus chargée et le rayon de courbure le plus petit de la portion courbe la moins chargée sera grand.

Dans l'exemple illustré, le rapport entre le rayon de courbure le plus grand de la portion courbe extrados 22b et le rayon de courbure le plus petit de la portion courbe intrados 22a est compris entre 4 et 6, par exemple 5.

Une telle configuration permet de minimiser les coefficients de concentration de contraintes et de diminuer l'intensité du pic de contraintes et des contraintes dans la lunule 14.

Une même portion courbe 22a, 22b peut présenter différents rayons de courbure, répartis en fonction de la position du pic de contraintes. Le rayon de courbure le plus proche du pic de contraintes est le plus grand, de manière à minimiser le coefficient de concentration de contraintes au point le plus critique.

Le rayon de courbure R1, R1' sur une même portion courbe 22a, 22b peut varier de 1,5mm dans une zone peu chargée à 20mm dans une zone fortement chargée.

Sur une même portion courbe 22a, 22b, le rapport entre le rayon de courbure le plus court et le rayon de courbure le plus long peut ainsi être compris entre 2 et 13.

Cela permet notamment d'optimiser les caractéristiques mécaniques dans les zones critiques, et la fabrication et les performances aérodynamiques dans les zones moins chargées d'une même portion courbe 22a, 22b.

Dans l'exemple illustré, le rayon de courbure R1 de la portion courbe extrados 22b peut varier entre 1,65mm et 10mm, pour un disque 4 présentant un diamètre extérieur de 370mm. Le rapport entre le rayon de courbure R1 le plus long et le rayon de courbure le plus court peut être compris entre 5 et 7.

Le diamètre extérieur d'un disque 4 est exprimé au niveau de la limite extérieure des dents 6. Les différentes dimensions des lunules 14 évoluent en fonction du diamètre du disque 4.

En référence à la figure 9b, l'axe normal n est incliné d'un angle β par rapport à l'axe X de la turbomachine autour du deuxième axe radial Z du disque 4 de rotor.

Dans un mode de réalisation, le second axe radial Z est un axe tangentiel perpendiculaire au premier axe radial Y.

En référence à la figure 9c, un facteur critique pour la concentration de contraintes au niveau de la lunule 14 est la présence d'une arête 19 vive entre la lunule 14 et l'alvéole 5.

Cette arête 19 peut présenter une géométrie étudiée pour réduire le facteur de concentration de contrainte dans cette zone.

Cette géométrie peut comprendre un chanfrein, un congé, un arrondi, un bossage, une surépaisseur ou tout traitement mécanique ou thermique permettant de réduire le pic de contrainte maximum relevé dans la zone de la lunule ou permettant d'accroître localement les caractéristiques mécaniques de la pièce.

Dans le cas d'un congé d'arête, le congé peut présenter un rayon de courbure r évolutif selon le point du congé. Ce mode de réalisation permet de réduire significativement le phénomène de concentration de contraintes dans la zone de la lunule 14.

Le congé présente :
- une première extrémité, correspondant à une intersection entre le congé et une première dent, et une deuxième extrémité, correspondant à une intersection entre le congé et une deuxième dent.
- une pluralité de plans radiaux, chaque plan radial comprenant l'axe X et coupant le congé entre la première et la deuxième extrémité, et
- une pluralité de sections radiales, chaque section radiale étant définies par l'intersection entre un plan radial associé et le congé.

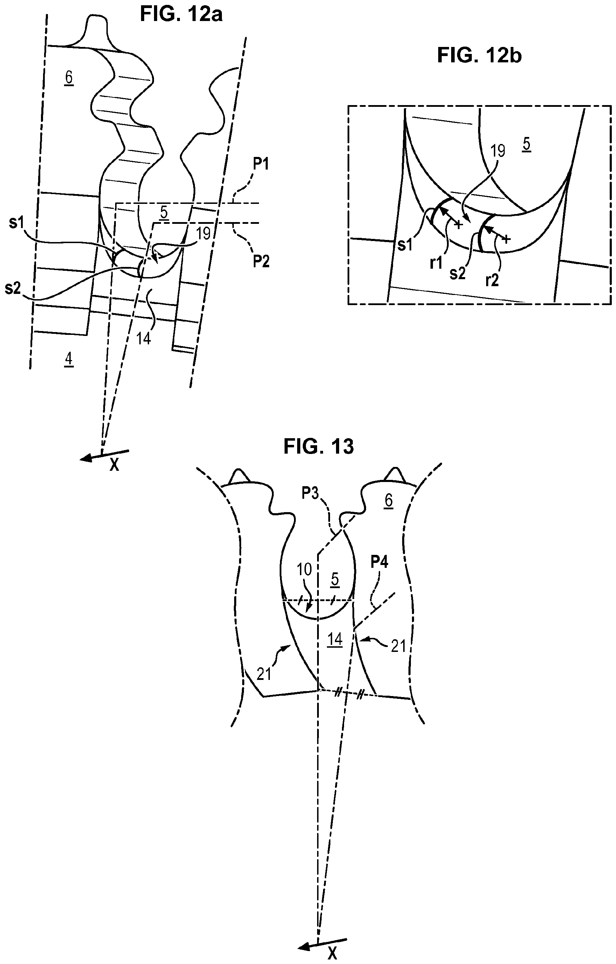

Chaque section radiale présente une courbure. La courbure desdites sections évolue entre la première et la deuxième extrémité. Notamment, le rayon de courbure r des sections radiales du congé d'arête évolue selon la position tangentielle du rayon de courbure r du congé d'arête. Par exemple, la figure 12a illustre deux sections radiales s1 et s2 définies par l'intersection entre deux plans radiaux P1 et P2 associés et le congé. Comme visible sur la figure 12b, le rayon de courbure r1, r2 de ces sections radiales si, s2 sont différents.

La zone du congé la plus proche du pic de contraintes présente le rayon de courbure r du congé d'arête le plus long. Plus précisément, en fonction de l'axe de brochage Φ, la position du pic de contraintes peut être plus proche de la première extrémité du congé d'arête (respectivement de la deuxième extrémité). Dans ce cas, le rayon de courbure du congé d'arête dans la zone adjacente à cette première extrémité doit être donc plus long (respectivement, plus court) que celui du congé d'arête dans la zone adjacente à la deuxième extrémité.

Par conséquent, la position tangentielle du rayon de courbure r du congé d'arête le plus long est fonction de l'angle de brochage Φ.

Plus un point du congé est chargé, plus le rayon de courbure r du congé d'arête en ce point est important. La répartition des rayons de courbure r du congé d'arête dépend de la répartition des contraintes sur l'arête 19.

Le rapport entre le rayon de courbure r le plus long du congé d'arête et le rayon de courbure le plus court dudit congé d'arête peut être compris entre 2 et 20, par exemple 5.

Le plus court des rayons de courbure r du congé d'arête peut être compris entre 0.5 mm et 2.5 mm, par exemple entre 0.8 et 1.5 mm pour un disque 4 de diamètre extérieur de 370 mm présentant un fond d'alvéole dont le rayon de courbure est de 4 mm.

Le plus long des rayons de courbure r du congé d'arête peut être compris entre 2 mm et 10 mm, par exemple entre 3.5 mm et 7 mm pour un disque de diamètre extérieur de 370 mm présentant un fond 10 d'alvéole dont le rayon de courbure est de 4 mm.

La géométrie de l'arête 19, et donc du congé, varie en fonction du diamètre du disque 4 et du rayon de courbure du fond 10 de l'alvéole.

Une telle configuration permet de réduire le coefficient de concentration de contraintes dans les zones les plus chargées et donc de diminuer les niveaux de contraintes, et le pic de contraintes.

En plus de réduire la concentration de contraintes dans la lunule 14, cette modification permet de réduire la criticité de la pièce dans un abaque établi par un consortium de motoristes (Rotor Integrity Sub-Committee (RISC)).

Ce classement (RoMan) associe un degré de criticité à une pièce en fonction des éléments géométriques qu'elle présente et permet de déterminer le procédé de fabrication qui sera appliqué pour réaliser cette pièce.

Plus la criticité est faible, moins les procédés de fabrication seront exigeants et donc coûteux.

La suppression d'une arête 19 vive au profit d'une arête 19 présentant un congé permet de réduire la criticité du disque 4. La réduction de la criticité du disque 4 permet de le réaliser par des procédés plus simples à mettre en œuvre et de réduire son coût de fabrication.

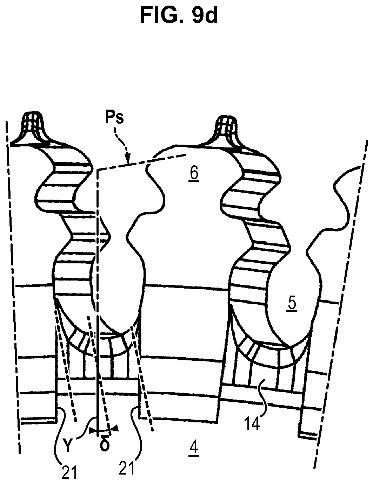

Selon l'invention comme illustré en figure 9d, les portions de surface latérales 21 de la lunule 14 sont inclinées (angle δ) par rapport au plan radial qui constitue le plan de symétrie de l'alvéole 5 dans laquelle débouche la lunule 14.

En effet, malgré le positionnement des lunules 14 en retrait des surfaces amont 16 des dents 6 de disque, une différence de vitesse tangentielle subsiste entre le flux F de refroidissement et les alvéoles 5. Le flux F de refroidissement circule dans un premier temps axialement pour atteindre la cavité amont 15, puis radialement pour atteindre les lunules 14 et enfin axialement pour entrer dans les alvéoles 5 malgré la vitesse tangentielle de ces dernières due à la rotation des disques 4.

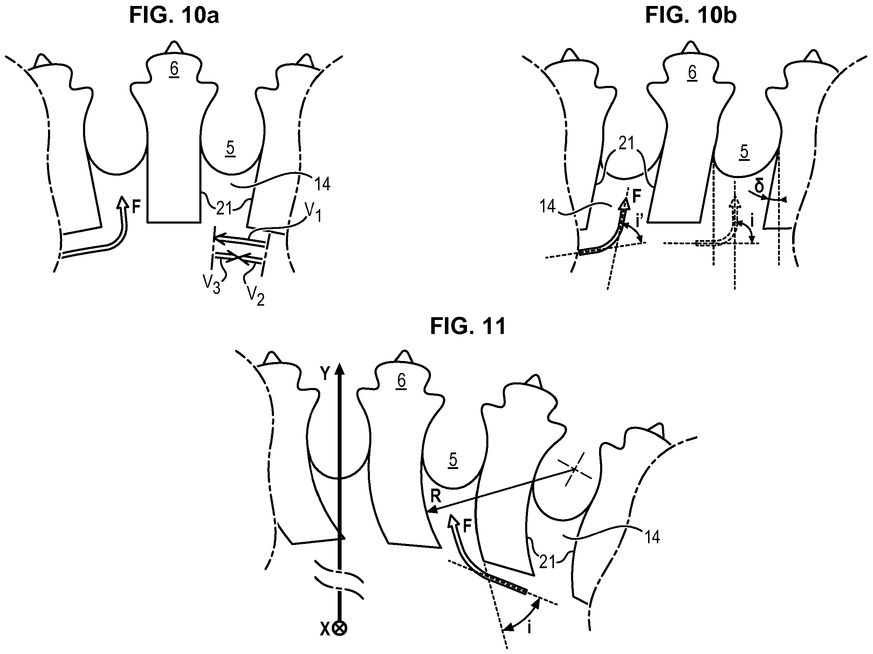

En référence à la figure 10a, au niveau de l'embouchure amont d'une lunule 14, le fluide de refroidissement circule à une vitesse tangentielle V1 alors que le point du disque 4 à ce rayon possède une vitesse tangentielle V2 supérieure à celle du fluide.

Le fluide a donc une vitesse relative V3 par rapport au disque 4, orientée inversement par rapport à la vitesse V1 du disque 4 en ce point.

Le fluide circule donc par rapport au disque 4 dans le sens inverse de la rotation du disque 4.

Par conséquent, pour réduire l'incidence i du coude dans l'écoulement du fluide de refroidissement, les parois latérales des lunules 14 sont inclinées (angle δ) par rapport à un plan radial Ps correspondant à un plan de symétrie de l'alvéole 5.

L'inclinaison des portions de surface latérales 21 des lunules 14 (angle δ) amoindrit le coude dans la direction du flux F de refroidissement au niveau de la lunule 14. Elle favorise son admission dans l'alvéole 5 en diminuant la perte de charge singulière dans cette zone, augmentant de ce fait l'efficacité du système de refroidissement.

Le sens d'inclinaison est choisi en fonction du sens de rotation attendu pour le disque 4 en fonctionnement afin de diminuer le coude que doit franchir le flux de refroidissement F.

En référence à la figure 11, afin de limiter l'impact des coudes dans l'écoulement, les portions de surface latérales 21 des lunules 14 peuvent présenter une courbure, permettant de ce fait de diminuer les pertes de charges singulières dans le circuit de ventilation et ainsi d'augmenter les performances de celui-ci.

Cette courbure peut être une courbure simple ou une courbure plus complexe (avec torsade par exemple).

La courbure des portions de surface latérales 21 peut être constante ou présenter un rayon de courbure variable configuré pour minimiser les pertes de charges le long de la lunule 14.

La courbure des portions de surface latérales 21 permet de réduire encore l'incidence i dans le coude du flux de fluide de refroidissement.

En effet, l'inclinaison des portions de surfaces latérales 21 des lunules 14 ne peut pas dépasser une certaine limite en raison des caractéristiques géométriques du disque 4, de son mode de fabrication et des caractéristiques mécaniques à respecter.

Une courbure permet de réduire l'incidence du coude du flux de fluide de refroidissement tout en réduisant l'inclinaison des portions de surface latérales 21 pour une incidence égale.

Les portions de surfaces latérales 21 peuvent présenter, au niveau du fond 10 de l'alvéole, une inclinaison inférieure à 20° par rapport à un plan radial P3, passant par un point médian de la lunule 14, préférentiellement une inclinaison inférieure à 10°.

Il est entendu par plan radial P3 le plan passant par le point médian de la lunule 14 au niveau du fond 10 de l'alvéole et comportant l'axe X de la turbomachine. Le point médial de la lunule 14 correspond ici au point situé au niveau du fond 10 de l'alvéole et à équidistance des portions de surfaces latérales 21. Un tel point médian a été illustré à titre d'exemple en figure 12.

L'inclinaison des portions de surfaces latérales 21 au niveau du fond 10 d'alvéole permet de favoriser l'entrée du flux de refroidissement dans l'alvéole 5.

Les portions de surfaces latérales 21 présentent une extrémité radialement intérieure par rapport à l'axe de la turbomachine.

Les portions de surfaces latérales 21 peuvent présenter, au niveau de leur extrémité intérieure, une inclinaison comprise entre 15° et 60° par rapport à un plan radial P4, où le plan P4 passe par un point médian de la lunule 14 au niveau de l'extrémité radialement intérieure des portions de surfaces latérales 21 et comprenant l'axe X, de manière à favoriser l'entrée du flux de refroidissement dans la lunule 14.

Il est entendu par point médian de la lunule 14 au niveau de l'extrémité radialement intérieure des portions de surfaces latérales 21 le point situé au niveau de l'extrémité intérieure des portions de surfaces latérales 21 et à équidistance des portions de surfaces latérales 21.

Dans un plan normal à l'axe X de la turbomachine et passant par une portion de surface latérale 21, le rayon de courbure R de la portion de surface latérale 21 peut être compris entre 20mm et 200mm. Le rayon de courbure R de la portion de surface latérale 21 peut être constant, et présenter par exemple une valeur de 50mm.

En variante, le rayon de courbure R de la portion de surface latérale 21 peut varier et présenter une valeur maximale dans la zone la plus contrainte, au niveau de l'alvéole 5, de manière à minimiser les concentrations de contraintes et une valeur minimale au niveau de l'extrémité radialement intérieure des portions de surfaces latérales 21, de manière à minimiser l'incidence i du coude du flux de refroidissement entrant dans la lunule 14.

La diminution des pertes de charges dans le système de refroidissement permet d'améliorer ses performances, augmentant ainsi la durée de vie des disques 4 et des aubes 2.

Cette diminution des pertes de charges permet également de réduire le débit du flux prélevé en amont de la turbine pour alimenter le système de refroidissement, minimisant ainsi l'impact du système de refroidissement sur les performances de la turbomachine.

## Revendications

1. Dispositif de refroidissement d'un disque (4) d'une turbine (T) s'étendant selon un axe (X), le disque (4) comportant sur sa circonférence au moins une alvéole (5) encadrée par des dents (6) de disque présentant chacune une face amont (16), l'alvéole (5) comportant un fond (10) en communication fluidique avec une cavité amont (15) par l'intermédiaire d'au moins une lunule (14), la lunule (14) comportant des portions de surfaces latérales (21), et l'alvéole présentant un plan radial (Ps) correspondant à un plan de symétrie de l'alvéole (5) dans laquelle débouche la lunule (14),
le dispositif de refroidissement étant **caractérisé en ce que** les portions de surfaces latérales (21) sont inclinées (angle δ) par rapport au plan radial, et **en ce que** l'alvéole (5) s'étend selon un axe (A) incliné d'un angle non nul de brochage (Φ) par rapport à l'axe (X) de la turbine, l'angle de brochage (Φ) étant supérieur à 0° et inférieur ou égal à 20°, le sens d'inclinaison des surfaces latérales (21) étant choisi en fonction du sens de rotation attendu pour le disque (4), les surfaces latérales étant inclinées dans la même direction.

2. Dispositif selon la revendication 1, **caractérisé en ce que** la lunule (14) comporte un fond (20) situé en retrait vers l'aval par rapport aux faces amont (16) des dents (6) de disque.

3. Dispositif selon la revendication 2, **caractérisé en ce que** la limite entre le fond de lunule (20) et le fond d'alvéole (10) présente une arête (19) cassée.

4. Dispositif selon la revendication 3, **caractérisé en ce que** l'arête (19) cassée comporte un congé d'arête qui présente un rayon de courbure (r) évolutif.

5. Dispositif selon la revendication 4, dans lequel le congé d'arête présente :
- une première extrémité, correspondant à une intersection entre le congé et une première dent (6), et une deuxième extrémité, correspondant à une intersection entre le congé et une deuxième dent (6),
- une pluralité de plans radiaux, chaque plan radial comprenant l'axe (X) de la turbine et coupant le congé entre la première et la deuxième extrémité, et
- une pluralité de sections radiales, chaque section radiale étant définie par l'intersection entre un plan radial associé et le congé, chaque section radiale présentant un rayon de courbure (r) du congé d'arête, le rayon de courbure (r) du congé d'arête évoluant entre la première et la deuxième extrémité, notamment selon la position tangentielle du rayon de courbure (r) du congé d'arête, et dans lequel le rapport entre le rayon de courbure (r) le plus long du congé d'arête et le rayon de courbure (r) le plus court dudit congé d'arête est compris entre 2 et 20.

6. Dispositif selon la revendication 5, dans lequel la position tangentielle du plus long des rayons de courbure (r) du congé d'arête est située au niveau d'un pic de contrainte du congé d'arête.

7. Dispositif selon l'une des revendications 2 à 6 **caractérisé en ce que** la lunule (14) comporte une portion courbe intrados (22a) et une portion courbe extrados (22b) joignant les portions de surfaces latérales (21) et le fond (20) de ladite lunule (14), chaque portion courbe (22a, 22b) comportant une pluralité de rayons de courbure (R1', R1).

8. Dispositif selon la revendication 7, **caractérisé en ce que** les rayons de courbure (R1') de la portion courbe intrados (22a) sont différents des rayons de courbures (R1) de la portion courbe extrados (22b).

9. Dispositif selon la revendication 8, dans lequel sur la portion courbe intrados (22a) ou la portion courbe extrados (22b), un rapport entre un plus long des rayons de courbure et un plus court des rayons de courbure est compris entre 2 et 13.

10. Dispositif selon l'une des revendications 8 ou 9, dans lequel un rapport entre chacun des rayons de courbure (R1, R1') de la plus chargée des portions courbes intrados et extrados (22a, 22b) et chacun des rayons de courbure de la moins chargée des portions courbes intrados et extrados (22a, 22b) est compris entre 1 et 20.

11. Dispositif selon l'une des revendications 2 à 10, **caractérisé en ce qu'**un axe normal (n) au fond de lunule (20) est défini comme étant perpendiculaire à une droite passant par les extrémités du fond de la lunule (14), cet axe normal (n) étant incliné d'un angle d'inclinaison (angle α) par rapport à l'axe (X) de la turbine dans une première direction.

12. Dispositif selon la revendication 11, **caractérisé en ce que** l'axe normal (n) au fond de lunule (20) est incliné (angle β) par rapport à l'axe (X) de la turbine (T) dans une deuxième direction.

13. Dispositif selon la revendication 11 ou 12, dans lequel un rapport entre l'angle d'inclinaison (α) de l'axe normal (n) par rapport à l'axe (X) de la turbine dans la première direction, et l'angle de brochage (Φ), est compris entre 0,2 et 1,4.

14. Dispositif selon l'une des revendications 1 à 13, **caractérisé en ce que** l'angle de brochage (Φ) est compris entre 3° et 16°, de préférence entre 6° et 12°.

15. Dispositif selon l'une des revendications 1 à 14, **caractérisé en ce que** les portions de surfaces latérales (21) de la lunule (14) sont courbes, et dans lequel au moins une des portions de surfaces latérales (21) présente un rayon de courbure (R) compris entre 20mm et 200mm.

16. Dispositif selon la revendication 15, dans lequel les portions de surfaces latérales (21) présentent, au niveau du fond (10) de l'alvéole, une inclinaison inférieure à 20° par rapport à un plan (P3) passant par un point médian de la lunule (14) au niveau du fond (10) de l'alvéole.

17. Dispositif selon l'une des revendications 15 ou 16, dans lequel les portions de surfaces latérales (21) présentent une extrémité radialement intérieure, et dans lequel les portions de surfaces latérales (21) présentent, au niveau de l'extrémité radialement intérieure, une inclinaison étant comprise entre 15° et 60° par rapport à un plan (P4) passant par un point médian de la lunule (14) au niveau de l'extrémité radialement intérieure des portions de surfaces latérales (21).

18. Dispositif selon la revendication 17, dans lequel le rayon de courbure (R) d'une portion de surface latérale présente une valeur maximale au niveau de l'alvéole (5) et une valeur minimale au niveau de l'extrémité radialement intérieure des portions de surfaces latérales (21).

19. Turbomachine comportant un dispositif selon l'une des revendications précédentes.

## Patentansprüche

1. Kühlvorrichtung einer Scheibe (4) einer Turbine (T), die sich entlang einer Achse (X) erstreckt, wobei die Scheibe (4) an Ihrem Umfang mindestens eine Alveole (5) beinhaltet, die von Scheibenzähnen (6) umrahmt ist, die jeweils eine stromaufwärtige Seite (16) aufweisen, wobei die Alveole (5) einen Boden (10) in Fluidverbindung mit einem stromaufwärtigen Hohlraum (15) über mindestens eine Halbmondöffnung (14) beinhaltet, wobei die Halbmondöffnung (14) Seitenflächenabschnitte (21) beinhaltet, und die Alveole eine radiale Ebene (Ps) aufweist, die einer Symmetrieebene der Alveole (5) entspricht, in welche die Halbmondöffnung (14) mündet,
wobei die Kühlvorrichtung **dadurch gekennzeichnet ist, dass** die Seitenflächenabschnitte (21) in Bezug auf die radiale Ebene geneigt (Winkel δ) geneigt ist, und dadurch, dass sich die Alveole (5) entlang einer um einen Räumwinkel ungleich null (φ) geneigten Achse (A) in Bezug auf die Achse (X) der Turbine erstreckt, wobei der Räumwinkel (φ) größer als 0° und kleiner oder gleich 20° ist, wobei die Neigungsrichtung der Seitenflächen (21) in Abhängigkeit von der erwarteten Drehrichtung für die Scheibe (4) ausgewählt wird, wobei die Seitenflächen in derselben Richtung geneigt sind.

2. Vorrichtung nach Anspruch 1, **dadurch gekennzeichnet, dass** die Halbmondöffnung (14) einen Boden (20) beinhaltet, der sich nach stromabwärts in Bezug auf die stromaufwärtigen Seiten (16) der Scheibenzähne (6) zurückgesetzt erstreckt.

3. Vorrichtung nach Anspruch 2, **dadurch gekennzeichnet, dass** die Grenze zwischen dem Boden (20) der Halbmondöffnung und dem Boden (10) der Alveole eine gebrochene Kante (19) aufweist.

4. Vorrichtung nach Anspruch 3, **dadurch gekennzeichnet, dass** die gebrochene Kante (19) eine Kantenverrundung beinhaltet, die einen evolutiven Krümmungsradius (r) aufweist.

5. Vorrichtung nach Anspruch 4, wobei die Kantenverrundung aufweist:
- ein erstes Ende, das einem Schnittpunkt zwischen der Verrundung und einem ersten Zahn (6) entspricht, und ein zweites Ende, das einem Schnittpunkt zwischen der Verrundung und einem zweiten Zahn (6) entspricht,
- eine Vielzahl von radialen Ebenen, wobei jede radiale Ebene die Achse (X) der Turbine umfasst, und die Verrundung zwischen dem ersten und dem zweiten Ende schneidet, und
- eine Vielzahl von radialen Querschnitten, wobei jeder radiale Querschnitt durch den Schnittpunkt zwischen einer zugeordneten radialen Ebene und der Verrundung definiert ist, wobei jeder radiale Querschnitt einen Krümmungsradius (r) der Kantenverrundung aufweist, wobei sich der Krümmungsradius (r) der Kantenverrundung zwischen dem ersten und zweiten Ende, insbesondere je nach tangentialer Position des Krümmungsradius (r) der Kantenverrundung entwickelt, und wobei das Verhältnis zwischen dem längsten Krümmungsradius (r) der Kantenverrundung und dem kürzesten Krümmungsradius (r) der Kantenverrundung zwischen 2 und 20 enthalten ist.

6. Vorrichtung nach Anspruch 5, wobei sich die längste tangentiale Position der Krümmungsradien (r) der Kantenverrundung im Bereich einer Spannungsspitze der Kantenverrundung befindet.

7. Vorrichtung nach einem der Ansprüche 2 bis 6, **dadurch gekennzeichnet, dass** die Halbmondöffnung (14) einen inneren Wölbungskurvenabschnitt (22a) und einen äußeren Wölbungskurvenabschnitt (22b) beinhaltet, die die Seitenflächenabschnitte (21) und den Boden (20) der Halbmondöffnung (14) verbinden, wobei jeder Kurvenabschnitt (22a, 22b) eine Vielzahl von Krümmungsradien (R1', R1) beinhaltet.

8. Vorrichtung nach Anspruch 7, **dadurch gekennzeichnet, dass** sich die Krümmungsradien (R1') des inneren Wölbungskurvenabschnitts (22a) von den Krümmungsradien (R1) des äußeren Wölbungskurvenabschnitts (22b) unterscheiden.

9. Vorrichtung nach Anspruch 8, wobei im inneren Wölbungskurvenabschnitt (22a) oder im äußeren Wölbungskurvenabschnitt (22b) ein Verhältnis zwischen einem längsten der Krümmungsradien und einem kürzesten der Krümmungsradien zwischen 2 und 13 enthalten ist.

10. Vorrichtung nach einem der Ansprüche 8 oder 9, wobei ein Verhältnis zwischen jedem der Krümmungsradien (R1, R1') des am stärksten ausgelasteten der inneren und äußeren Wölbungskurvenabschnitte (22a, 22b) und jedem der Krümmungsradien der am wenigsten ausgelasteten der inneren und äußeren Wölbungskurvenabschnitte (22a, 22b) zwischen 1 und 20 enthalten ist.

11. Vorrichtung nach einem der Ansprüche 2 bis 10, **dadurch gekennzeichnet, dass** eine normale Achse (n) am Boden (20) der Halbmondöffnung als senkrecht zu einer Geraden definiert ist, die durch die Enden des Bodens der Halbmondöffnung (14) führen, wobei diese normale Achse (n) um einen Neigungswinkel (Winkel α) in Bezug auf die Achse (X) der Turbine in einer ersten Richtung geneigt ist.

12. Vorrichtung nach Anspruch 11, **dadurch gekennzeichnet, dass** die normale Achse (n) am Boden (20) der Halbmondöffnung in Bezug auf die Achse (X) der Turbine (T) in einer zweiten Richtung geneigt (Winkel β) ist.

13. Vorrichtung nach Anspruch 11 oder 12, wobei ein Verhältnis zwischen dem Neigungswinkel (α) der normalen Achse (n) in Bezug auf die Achse (X) der Turbine in der ersten Richtung und dem Räumwinkel (φ) zwischen 0,2 und 1,4 enthalten ist.

14. Vorrichtung nach einem der Ansprüche 1 bis 13, **dadurch gekennzeichnet, dass** der Räumwinkel (φ) zwischen 3° und 16°, vorzugsweise zwischen 6° und 12° enthalten ist.

15. Vorrichtung nach einem der Ansprüche 1 bis 14, **dadurch gekennzeichnet, dass** die Seitenflächenabschnitte (21) der Halbmondöffnung (14) gekrümmt sind, und wobei mindestens einer der Seitenflächenabschnitte (21) einen Krümmungsradius (R) aufweist, der zwischen 20 mm und 200 mm enthalten ist.

16. Vorrichtung nach Anspruch 15, wobei die Seitenflächenabschnitte (21) im Bereich des Bodens der Alveole (10) eine Neigung kleiner als 20° in Bezug auf eine Ebene (P3) aufweisen, die durch einen Mittenpunkt der Halbmondöffnung (14) im Bereich des Bodens der Alveole (10) verläuft.

17. Vorrichtung nach einem der Ansprüche 15 oder 16, wobei die Seitenflächenabschnitte (21) ein radial inneres Ende aufweisen, und wobei die Seitenflächenabschnitte (21) im Bereich des radial inneren Abschnitts eine Neigung aufweisen, die zwischen 15° und 60° in Bezug auf eine Ebene (P4) enthalten ist, die durch einen Mittenpunkt der Halbmondöffnung (14) im Bereich des radial inneren Abschnitts der Seitenflächenabschnitte (21) verläuft.

18. Vorrichtung nach Anspruch 17, wobei der Krümmungsradius (R) eines Seitenflächenabschnitts einen maximalen Wert im Bereich der Alveole (5) und einen minimalen Wert im Bereich des radial inneren Endes der Seitenflächenabschnitte (21) aufweist.

19. Turbomaschine, die eine Vorrichtung nach einem der vorstehenden Ansprüche beinhaltet.

## Claims

1. A cooling device for a disk (4) of a turbine (T) extending along an axis (X), the disk (4) including on its circumference at least one cell (5) framed by disk teeth (6) each having an upstream face (16), the cell (5) including a bottom (10) in fluid communication with an upstream cavity (15) via at least one lunula (14), the lunula (14) including lateral surface portions (21), and the cell having a radial plane (Ps) corresponding to a plane of symmetry of the cell (5) into which the lunula (14) opens,
the cooling device being **characterised in that** the lateral surface portions (21) are inclined (angle δ) relative to the radial plane, and **in that** the cell (5) extends along an axis (A) inclined by a non-zero broach angle (Φ) relative to the axis (X) of the turbine, the broach angle (Φ) being greater than 0° and less than or equal to 20°, the direction of inclination of the lateral surfaces (21) being selected according to the direction of rotation expected for the disk (4), the lateral surfaces being inclined in the same direction.

2. The device according to claim 1, **characterised in that** the lunula (14) includes a bottom (20) set back downstream relative to the upstream faces (16) of the disk teeth (6).

3. The device according to claim 2, **characterised in that** the limit between the bottom of the lunula (20) and the bottom of the cell (10) has a broken edge (19).

4. The device according to claim 3, **characterised in that** the broken edge (19) includes an edge fillet which has an evolving radius of curvature (r).

5. The device according to claim 4, wherein the edge fillet has:
- a first end, corresponding to an intersection between the fillet and a first tooth (6), and a second end, corresponding to an intersection between the fillet and a second tooth (6),
- a plurality of radial planes, each radial plane comprising the axis (X) of the turbine and intersecting the fillet between the first and the second end, and
- a plurality of radial sections, each radial section being defined by the intersection between an associated radial plane and the fillet, each radial section having a radius of curvature (r) of the edge fillet, the radius of curvature (r) of the edge fillet evolving between the first and second end, in particular according to the tangential position of the radius of curvature (r) of the edge fillet, and wherein the ratio between the longest radius of curvature (r) of the edge fillet and the shortest radius of curvature (r) of said edge fillet is comprised between 2 and 20.

6. The device according to claim 5, wherein the tangential position of the longest one of the radii of curvature (r) of the edge fillet is located at a stress peak of the edge fillet.

7. The device according to one of claims 2 to 6 **characterised in that** the lunula (14) includes a curved lower surface portion (22a) and a curved upper surface portion (22b) joining the lateral surface portions (21) and the bottom (20) of said lunula (14), each curved portion (22a, 22b) including a plurality of radii of curvature (R1', R1).

8. The device according to claim 7, **characterised in that** the radii of curvature (R1') of the curved lower surface portion (22a) are different from the radii of curvature (R1) of the curved upper surface portion (22b).

9. The device according to claim 8, wherein on the curved lower surface portion (22a) or the curved upper surface portion (22b), a ratio between a longest one of the radii of curvature and a shortest one of the radii of curvature is comprised between 2 and 13.

10. The device according to one of claims 8 or 9, wherein a ratio between each of the radii of curvature (R1, R1') of the most loaded of the curved lower surface and upper surface portions (22a, 22b) and each of the radii of curvature of the least loaded of the curved lower surface and upper surface portions (22a, 22b) is comprised between 1 and 20.

11. The device according to one of claims 2 to 10, **characterised in that** an axis (n) normal to the bottom of the lunula (20) is defined as being perpendicular to a straight line passing through the ends of the bottom of the lunula (14), this normal axis (n) being inclined by an angle of inclination (angle a) relative to the axis (X) of the turbine in a first direction.

12. The device according to claim 11, **characterised in that** the axis (n) normal to the bottom of the lunula (20) is inclined (angle β) relative to the axis (X) of the turbine (T) in a second direction.

13. The device according to claim 11 or 12, wherein a ratio between the angle of inclination (a) of the normal axis (n) relative to the axis (X) of the turbine in the first direction, and the broach angle (φ) is comprised between 0.2 and 1.4.

14. The device according to one of claims 1 to 13, **characterised in that** the broach angle (φ) is comprised between 3° and 16°, preferably between 6° and 12°.

15. The device according to one of claims 1 to 14, **characterised in that** the lateral surface portions (21) of the lunula (14) are curved, and wherein at least one of the lateral surface portions (21) has a radius of curvature (R) comprised between 20mm and 200mm.

16. The device according to claim 15, wherein the lateral surface portions (21) have, at the bottom (10) of the cell, an inclination less than 20° relative to a plane (P3) passing through a middle point of the lunula (14) at the bottom (10) of the cell.

17. The device according to one of claims 15 or 16, wherein the lateral surface portions (21) have a radially inner end, and wherein the lateral surface portions (21) have, at the radially inner end, an inclination being comprised between 15° and 60° relative to a plane (P4) passing through a middle point of the lunula (14) at the radially inner end of the lateral surface portions (21).

18. The device according to claim 17, wherein the radius of curvature (R) of a lateral surface portion has a maximum value at the cell (5) and a minimum value at the radially inner end of the lateral surface portions (21) .

19. A turbomachine including a device according to one of the preceding claims.
